# FASCICULE DE BREVET EUROPEEN

(11) **EP 0 802 619 B1**
(45) Date de publication et mention de la délivrance du brevet: **05.12.2001**
(21) Numéro de dépôt: 97400840.1
(22) Date de dépôt: 14.04.1997
(51) Int. Cl.: H02M 7/521

(54) **Dispositif à empilement de thyristors et de diodes de roue libre**
Vorrichtung mit gestapelten Thyristoren und Freilaufdioden
Stacked thyristors and freewheel diodes device

(30) Priorité: 18.04.1996 FR 9604870
(43) Date de publication de la demande: 22.10.1997
(73) Titulaire: GEC ALSTHOM TRANSPORT SA, 75016 Paris (FR)
(72) Inventeur: Denis, Philippe, 65800 Orleix (FR); Donnet, Serge, 65000 Tarbes (FR)
(74) Mandataire: Gosse, Michel

(56) Documents cités:
- EP-A- 0 069 971
- GB-A- 2 094 547
- US-A- 4 864 385

## Description

La présente invention concerne les dispositifs à semi-conducteurs de puissance ainsi que leurs dispositifs d'interface électrique, en général, et porte, plus particulièrement, sur un dispositif à empilement de thyristors et de diodes de roue libre.

Les dispositifs à semi-conducteurs de puissance sont des éléments composés de semi-conducteurs de puissance susceptibles d'être différents les uns des autres.

A titre d'exemple, parmi les éléments à semi-conducteurs de puissance on peut citer les thyristors, les diodes et les diodes de roue libre.

Ces éléments à semi-conducteurs de puissance sont refroidis au moyen de dispositifs de refroidissement dissipant la chaleur par circulation d'un liquide de refroidissement.

Chacun des éléments à semi-conducteurs de puissance sont montés en sandwich entre deux éléments de maintien, l'un de ces éléments de maintien ou les deux éléments de maintien pouvant être un dispositif de refroidissement.

L'ensemble éléments à semi-conducteurs de puissance et éléments de maintien constitue un seul et même dispositif à empilement de thyristors et de diodes de roue libre.

Ce dispositif à empilement de thyristors et de diodes de roue libre est encore désigné par le terme pile.

Les éléments à semi-conducteurs de puissance doivent être protégés électriquement au moyen d'un circuit de protection, à savoir des condensateurs.

Les différentes connexions électriques entre les éléments à semi-conducteurs de puissance et le circuit de protection sont réalisées au niveau de chacun des dispositifs de refroidissement ou à défaut au niveau d'un moyen de maintien en l'absence d'un dispositif de refroidissement.

Dans une telle structure le moyen de maintien assure la continuité électrique entre deux éléments à semi-conducteurs de puissance ou entre un élément à semi-conducteur de puissance et un circuit de protection.

Ainsi, il est connu du document EP-A-0 69 971, un dispositif à empilement d'éléments à semi-conducteur comportant des bornes de connexion électrique et des dispositifs de refroidissement entre lesquels sont interposés des diodes et thyristors.

Toutefois, les ensembles éléments à semi-conducteurs de puissance et éléments de maintien, c'est à dire les dispositifs à empilement de thyristors et de diodes de roue libre de l'état de la technique nécessitent d'adapter les connexions électriques.

Les ensembles éléments à semi-conducteurs de puissance et éléments de maintien peuvent être différents du fait qu'ils découlent du schéma électrique retenu.

Les connexions électriques d'alimentation +HT, -HT et de sortie PM du dispositif à empilement de thyristor GTO et de diodes de roue libre DRL et les connexions électriques Cs, Cc entre les diodes Ds, Dc et le circuit de protection sont donc différentes d'un schéma électrique à l'autre.

Aussi un but de l'invention est-il un dispositif à empilement de thyristors et de diodes de roue libre, permettant un câblage unique quelle que soit la fonction électrique du dispositif à semi-conducteurs de puissance.

Un autre but de l'invention est un dispositif à empilement de thyristors et de diodes de roue libre, nécessitant un minimum de dispositifs de refroidissement.

Conformément à l'invention, le dispositif à empilement de thyristors GTO et de diodes de roue libre DRL pour dispositif à semi-conducteurs, ledit dispositif à empilement comportant des bornes de connexion électrique d'alimentation +HT, -HT et de sortie PM dudit dispositif à empilement, ledit dispositif à empilement, se caractérise en ce que l'agencement géométrique du câblage desdites bornes de connexion électrique +HT, PM et -HT est prédéterminé de manière à permettre de modifier la disposition desdits thyristors GTO et desdites diodes de roue libre DRL dans ledit empilement en vue d'obtenir différentes fonctions électriques du dispositif à semi-conducteurs.

Le dispositif à empilement de thyristors GTO et de diodes de roue libre DRL pour dispositif à semi-conducteurs de l'invention satisfait également à l'une au moins des caractéristiques suivantes:
- le dispositif, pour convertisseur, comporte successivement un premier dispositif de refroidissement R1, un premier thyristor GTOs, un deuxième dispositif de refroidissement R2, une première diode de roue libre DRLs, un troisième dispositif de refroidissement R3, une seconde diode de roue libre DRLi, un quatrième dispositif de refroidissement R4, un second thyristor GTOi et un cinquième dispositif de refroidissement R5, ladite borne de connexion +HT étant reliée à l'anode du premier thyristor GTOs et à la cathode de la première diode de roue libre DRLs, ladite borne de connexion PM étant reliée à l'anode de ladite première diode de roue libre DRLs et à la cathode de la seconde diode de roue libre DRLi ainsi qu'à la cathode dudit premier thyristor GTOs et à l'anode du second thyristor GTOi, ladite borne de connexion -HT étant reliée à l'anode de ladite seconde diode de roue libre DRLi et à la cathode dudit second thyristor GTOi,
- dispositif dans lequel le troisième dispositif de refroidissement R3 est remplacé par un élément conducteur M,
- le dispositif, pour convertisseur, comporte successivement un premier dispositif de refroidissement R1, une première diode de roue libre DRLs, un deuxième dispositif de refroidissement R2, un premier thyristor GTOs, un troisième dispositif de refroidissement R3, un second thyristor GTOi, un quatrième dispositif de refroidissement R4, une seconde diode de roue libre DRLi et un cinquième dispositif de refroidissement R5, ladite borne de connexion +HT étant reliée à la cathode de la première diode de roue libre DRLs et à l'anode du premier thyristor GTOs, ladite borne de connexion PM étant reliée à la cathode dudit premier thyristor GTOs et à l'anode du second thyristor GTOi ainsi qu'à l'anode de ladite première diode de roue libre DRLs et à la cathode de la seconde diode de roue libre DRLi, ladite borne de connexion -HT étant reliée à la cathode dudit second thyristor GTOi et à l'anode de ladite seconde diode de roue libre DRLi,
- dispositif dans lequel les premier R1 et cinquième R5 dispositifs de refroidissement sont remplacés par des éléments conducteurs M,
- le dispositif, pour convertisseur, comporte successivement un premier élément conducteur M'1, une première diode de roue libre DRL's, un premier dispositif de refroidissement R'1, un premier thyristor GTO's, un deuxième dispositif de refroidissement R'2, un second thyristor GTO'i, un troisième dispositif de refroidissement R'3, une seconde diode de roue libre DRL'i et un second élément conducteur M'2, ladite borne de connexion +HT étant reliée à la cathode de la première diode de roue libre DRL's et à l'anode du premier thyristor GTO's, ladite borne de connexion PM étant reliée à la cathode dudit premier thyristor GTO's et à l'anode du second thyristor GTO'i ainsi qu'à l'anode de ladite première diode de roue libre DRL's et à la cathode de la seconde diode de roue libre DRL'i, ladite borne de connexion -HT étant reliée à la cathode dudit second thyristor GTO'i et à l'anode de ladite seconde diode de roue libre DRL'i,
- le dispositif, pour convertisseur, comporte successivement un premier dispositif de refroidissement R'1, un premier thyristor GTO's, un deuxième dispositif de refroidissement R'2, une première diode de roue libre DRL's, un premier élément conducteur M'1, une seconde diode de roue libre DRL'i, un troisième dispositif de refroidissement R'3, un second thyristor GTO'i et un quatrième dispositif de refroidissement R'4, ladite borne de connexion +HT étant reliée à l'anode du premier thyristor GTO's et à la cathode de la première diode de roue libre DRL's, ladite borne de connexion PM étant reliée à l'anode de ladite première diode de roue libre DRL's et à la cathode de la seconde diode de roue libre DRL'i ainsi qu'à la cathode dudit premier thyristor GTO's et à l'anode du second thyristor GTO'i, ladite borne de connexion -HT étant reliée à l'anode de ladite seconde diode de roue libre DRL'i et à la cathode dudit second thyristor GTO'i,
- le dispositif, pour convertisseur, comporte successivement un premier élément conducteur M"1, une première diode de roue libre DRL"s, un premier dispositif de refroidissement R"1, un thyristor GTO"s, un deuxième dispositif de refroidissement R"2, une seconde diode de roue libre DRL"i, un troisième dispositif de refroidissement R"3, un élément isolant I" et un second élément conducteur M"2, ladite borne de connexion +HT étant reliée à la cathode de la première diode de roue libre DRL"s et à l'anode du thyristor GTO"s, ladite borne de connexion PM étant reliée à la cathode dudit thyristor GTO"s et à la cathode de la seconde diode de roue libre DRL"i ainsi qu'à l'anode de ladite première diode de roue libre DRL"s, ladite borne de connexion -HT étant reliée à l'anode de ladite seconde diode de roue libre DRL"i,
- dispositif dans lequel le troisième dispositif de refroidissement R"3 est remplacé par un élément conducteur,
- le dispositif, pour convertisseur, comporte successivement un premier élément conducteur M"1, une première diode de roue libre DRL"s, un premier dispositif de refroidissement R"1, un thyristor GTO"s, un deuxième dispositif de refroidissement R"2, un élément isolant I", un troisième dispositif de refroidissement R"3, une seconde diode de roue libre DRL"i et un quatrième dispositif de refroidissement R"4, ladite borne de connexion +HT étant reliée à la cathode de la première diode de roue libre DRL"s et à l'anode du thyristor GTO"s, ladite borne de connexion PM étant reliée à la cathode dudit thyristor GTO"s ainsi qu'à l'anode de ladite première diode de roue libre DRL"s et à la cathode de la seconde diode de roue libre DRL"i, ladite borne de connexion -HT étant reliée à l'anode de ladite seconde diode de roue libre DRL"i,
- dispositif dans lequel le troisième dispositif de refroidissement R"3 ou le quatrième dispositif de refroidissement R"4 est remplacé par un élément conducteur,
- le dispositif est complété successivement par une première diode Ds, un dispositif de refroidissement R, une seconde diode Dc et un élément conducteur M, lesdites première Ds et seconde Dc diodes étant polarisées en inverse sous une tension de potentiels -HT et +HT à travers une capacité Cc d'un circuit de protection P, une capacité Cs dudit circuit de protection P étant disposée entre ladite borne de connexion électrique de sortie PM et la borne commune Cs desdites première Ds et seconde diode Dc.

Un avantage du dispositif à empilement de l'invention est l'utilisation de moyens de connexion électrique standards, par exemple un bus barres, pour connecter électriquement le dispositif à empilement et le circuit de protection de ce dispositif.

Un autre avantage du dispositif à empilement de l'invention est la possibilité d'optimiser le nombre de dispositifs de refroidissement tout en conservant une connectique unique pour plusieurs applications du dispositif à semi-conducteurs.

Un autre avantage du dispositif à empilement de l'invention est la réalisation d'une ligne de produits standards du type pont mixte à commutation forcée ou du type onduleur.

Un autre avantage du dispositif à empilement de l'invention est la réalisation de produits standards à forte puissance thermique ou à puissance thermique moindre toujours en conservant une connectique unique.

D'autres buts, caractéristiques et avantages de l'invention apparaîtront à la lecture de la description des modes de réalisation préférée du dispositif à empilement, description faite en liaison avec les dessins dans lesquels:
- la figure 1 montre le schéma électrique connu d'un bras de convertisseur du type pont mixte à commutation forcée ou du type onduleur,
- les figures 2 et 3 montrent une représentation schématique du dispositif à empilement pour convertisseur, en général, et, plus particulièrement, pour pont mixte à commutation forcée, conformément à l'invention,
- les figures 4 et 5 montrent une représentation schématique du dispositif à empilement pour convertisseur, en général, et, plus particulièrement, pour onduleur, conformément à l'invention,
- la figure 6 montre le schéma électrique connu d'un bras de convertisseur du type hacheur,
- les figures 7 et 8 montrent une représentation schématique du dispositif à empilement pour convertisseur, en général, et, plus particulièrement, pour hacheur conformément à l'invention.

Le dispositif à empilement de thyristors GTO, de diodes de roue libre DRL et de diodes D de l'invention est destiné aux dispositifs à semi-conducteurs du type convertisseur.

Le dispositif à empilement comporte des bornes de connexion électrique d'alimentation +HT, -HT et de sortie PM.

En vue de constituer une phase complète d'un dispositif à semi-conducteurs, le dispositif à empilement est complété par des bornes de connexion électrique Cs, Cc entre des diodes Ds, Dc et un circuit de protection P.

Conformément à une caractéristique essentielle de l'invention, le dispositif à empilement est tel que l'agencement géométrique du câblage des bornes de connexion électrique +HT, PM et -HT est prédéterminé.

Il résulte de cette caractéristique qu'une modification de la disposition des thyristors GTO et des diodes de roue libre DRL dans l'empilement permet d'obtenir différentes fonctions électriques du dispositif à semi-conducteurs.

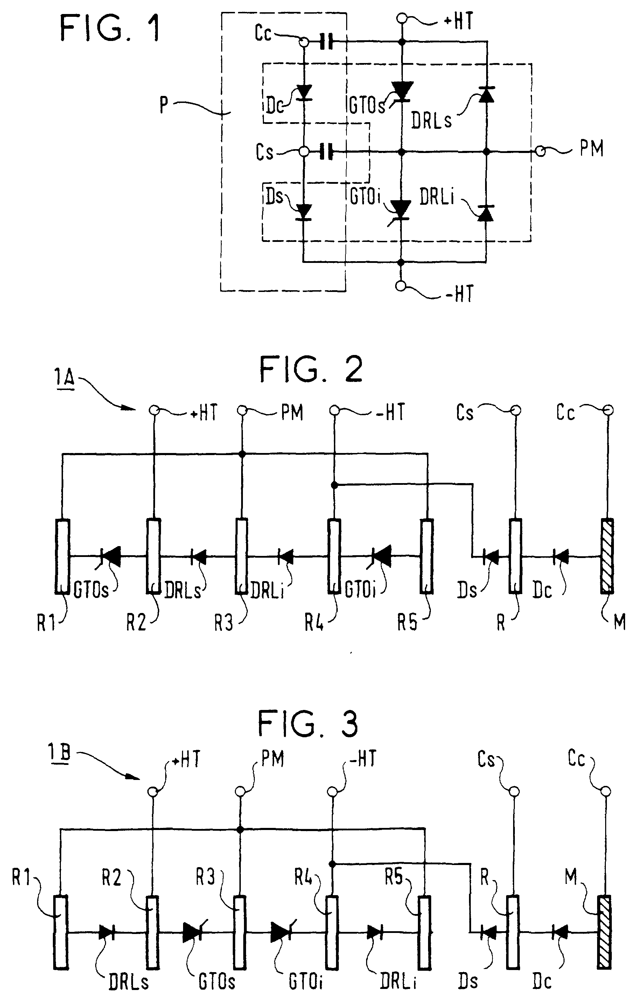

La figure 1 montre le schéma électrique connu d'un bras de convertisseur du type pont mixte à commutation forcée ou du type onduleur.

Dans des applications du type pont mixte à commutation forcée nécessitant l'évacuation de fortes puissances thermiques, chaque face des thyristors nécessite un dispositif de refroidissement.

Les figures 2 et 3 montrent une représentation schématique de deux modes de réalisation préférée du dispositif à empilement pour convertisseur et, plus particulièrement, pour pont mixte à commutation forcée.

Comme représenté à la figure 2, le dispositif à empilement 1A pour pont mixte à commutation forcée comporte successivement un premier dispositif de refroidissement R1, un premier thyristor GTOs, un deuxième dispositif de refroidissement R2, une première diode de roue libre DRLs, un troisième dispositif de refroidissement R3, une seconde diode de roue libre DRLi, un quatrième dispositif de refroidissement R4, un second thyristor GTOi et un cinquième dispositif de refroidissement R5.

L'anode du premier thyristor GTOs est reliée au potentiel +HT.

L'anode du second thyristor GTOi est reliée à la borne PM.

La cathode du premier thyristor GTOs est reliée à la borne PM.

La cathode du second thyristor GTOi est reliée au potentiel -HT.

L'anode de la première diode de roue libre DRLs est reliée à la borne PM.

L'anode de la seconde diode de roue libre DRLi est reliée au potentiel -HT.

La cathode de la première diode de roue libre DRLs est reliée au potentiel +HT.

La cathode de la seconde diode de roue libre DRLi est reliée à la borne PM.

Pour ce faire, la borne de connexion +HT est reliée à l'anode du premier thyristor GTOs et à la cathode de la première diode de roue libre DRLs.

La borne de connexion PM est reliée à l'anode de la première diode de roue libre DRLs et à la cathode de la seconde diode de roue libre DRLi ainsi qu'à la cathode du premier thyristor GTOs et à l'anode du second thyristor GTOi.

La borne de connexion -HT est reliée à l'anode de la seconde diode de roue libre DRLi et à la cathode du second thyristor GTOi.

Comme représenté à la figure 3, le dispositif 1B pour pont mixte à commutation forcée comporte successivement un premier dispositif de refroidissement R1, une première diode de roue libre DRLs, un deuxième dispositif de refroidissement R2, un premier thyristor GTOs, un troisième dispositif de refroidissement R3, un second thyristor GTOi, un quatrième dispositif de refroidissement R4, une seconde diode de roue libre DRLi et un cinquième dispositif de refroidissement R5.

L'anode du premier thyristor GTOs est reliée au potentiel +HT.

L'anode du second thyristor GTOi est reliée à la borne PM.

La cathode du premier thyristor GTOs est reliée à la borne PM.

La cathode du second thyristor GTOi est reliée au potentiel -HT.

L'anode de la première diode de roue libre DRL's est reliée à la borne PM.

L'anode de la seconde diode de roue libre DRL'i est reliée au potentiel -HT.

La cathode de la première diode de roue libre DRL's est reliée au potentiel +HT.

La cathode de la seconde diode de roue libre DRL'i est reliée à la borne PM.

Pour ce faire, la borne de connexion +HT est reliée à la cathode de la première diode de roue libre DRLs et à l'anode du premier thyristor GTOs.

La borne de connexion PM est reliée à la cathode du premier thyristor GTOs et à l'anode du second thyristor GTOi ainsi qu'à l'anode de la première diode de roue libre DRLs et à la cathode de la seconde diode de roue libre DRLi.

La borne de connexion -HT est reliée à la cathode du second thyristor GTOi et à l'anode de la seconde diode de roue libre DRLi.

Dans ces deux modes de réalisation préférée du dispositif à empilement de l'invention, les troisièmes dispositifs de refroidissement R3 (figure 2) et les premier R1 et cinquième R5 dispositifs de refroidissement (figure 3) peuvent être remplacés par des éléments conducteurs dans le cas d'une puissance thermique à transmettre moindre.

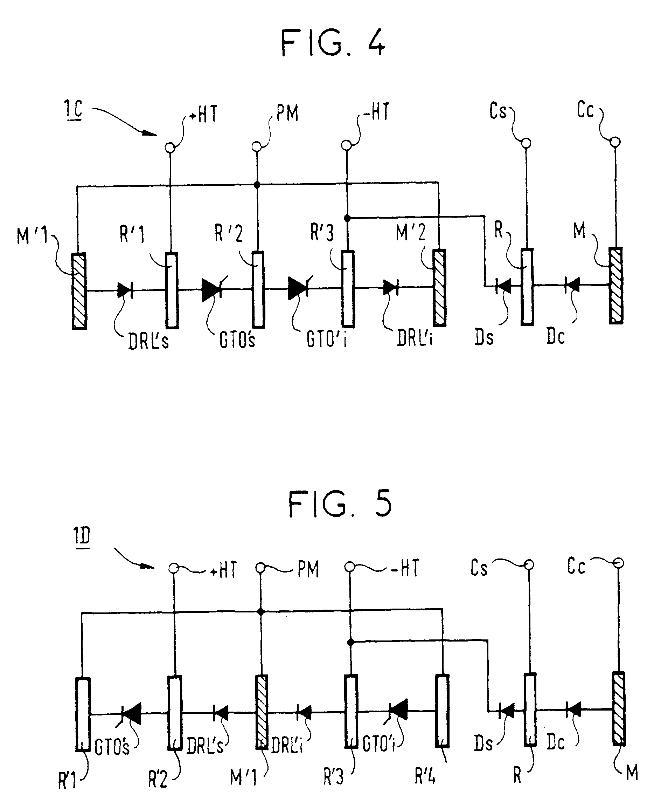

Les figures 4 et 5 montrent une représentation schématique de deux modes de réalisation préférée du dispositif à empilement pour convertisseur et, plus particulièrement, pour onduleur.

Dans des applications du type onduleur nécessitant l'évacuation de puissances thermiques moindres, seule une face des diodes de roue libre nécessite un dispositif de refroidissement.

A partir de la représentation schématique du dispositif à empilement de la figure 2, pour passer du domaine des fortes puissances thermiques transmises aux faibles puissances thermiques transmises tout en minimisant le nombre de dispositif de refroidissement, on inverse le sens de chaque semi-conducteur et on permute une diode de roue libre avec un thyristor.

Il résulte de ce qui précède la représentation schématique de la figure 4 dans laquelle le dispositif à empilement 1C pour onduleur comporte successivement un premier élément conducteur M'1, une première diode de roue libre DRL's, un premier dispositif de refroidissement R'1, un premier thyristor GTO's, un deuxième dispositif de refroidissement R'2, un second thyristor GTO'i, un troisième dispositif de refroidissement R'3, une seconde diode de roue libre DRL'i et un second élément conducteur M'2,

L'anode du premier thyristor GTO's est reliée au potentiel +HT.

L'anode du second thyristor GTO'i est reliée à la borne PM.

La cathode du premier thyristor GTO's est reliée à la borne PM.

La cathode du second thyristor GTO'i est reliée au potentiel -HT.

L'anode de la première diode de roue libre DRL's est reliée à la borne PM.

L'anode de la seconde diode de roue libre DRL'i est reliée au potentiel -HT.

La cathode de la première diode de roue libre DRL's est reliée au potentiel +HT.

La cathode de la seconde diode de roue libre DRL'i est reliée à la borne PM.

Pour ce faire, la borne de connexion +HT est reliée à la cathode de la première diode de roue libre DRL's et à l'anode du premier thyristor GTO's.

La borne de connexion PM est reliée à la cathode du premier thyristor GTO's et à l'anode du second thyristor GTO'i ainsi qu'à l'anode de la première diode de roue libre DRL's et à la cathode de la seconde diode de roue libre DRL'i.

La borne de connexion -HT est reliée à la cathode du second thyristor GTO'i et à l'anode de la seconde diode de roue libre DRL'i.

Comme représenté à la figure 5, le dispositif à empilement 1D pour onduleur comporte successivement un premier dispositif de refroidissement R'1, un premier thyristor GTO's, un deuxième dispositif de refroidissement R'2, une première diode de roue libre DRL's, un premier élément conducteur M'1, une seconde diode de roue libre DRL'i, un troisième dispositif de refroidissement R'3, un second thyristor GTO'i et un troisième dispositif de refroidissement R'5.

L'anode du premier thyristor GTO's est reliée au potentiel +HT.

L'anode du second thyristor GTO'i est reliée à la borne PM.

La cathode du premier thyristor GTO's est reliée à la borne PM.

La cathode du second thyristor GTO'i est reliée au potentiel -HT.

L'anode de la première diode de roue libre DRL's est reliée à la borne PM.

L'anode de la seconde diode de roue libre DRL'i est reliée au potentiel -HT.

La cathode de la première diode de roue libre DRL's est reliée au potentiel +HT.

La cathode de la seconde diode de roue libre DRL'i est reliée à la borne PM.

Pour ce faire, la borne de connexion +HT est reliée à l'anode du premier thyristor GTO's et à la cathode de la première diode de roue libre DRL's.

La borne de connexion PM est reliée à l'anode de la première diode de roue libre DRL's et à la cathode de la seconde diode de roue libre DRL'i ainsi qu'à la cathode du premier thyristor GTO's et à l'anode du second thyristor GTO'i.

La borne de connexion -HT est reliée à l'anode de la seconde diode de roue libre DRL'i et à la cathode du second thyristor GTO'i.

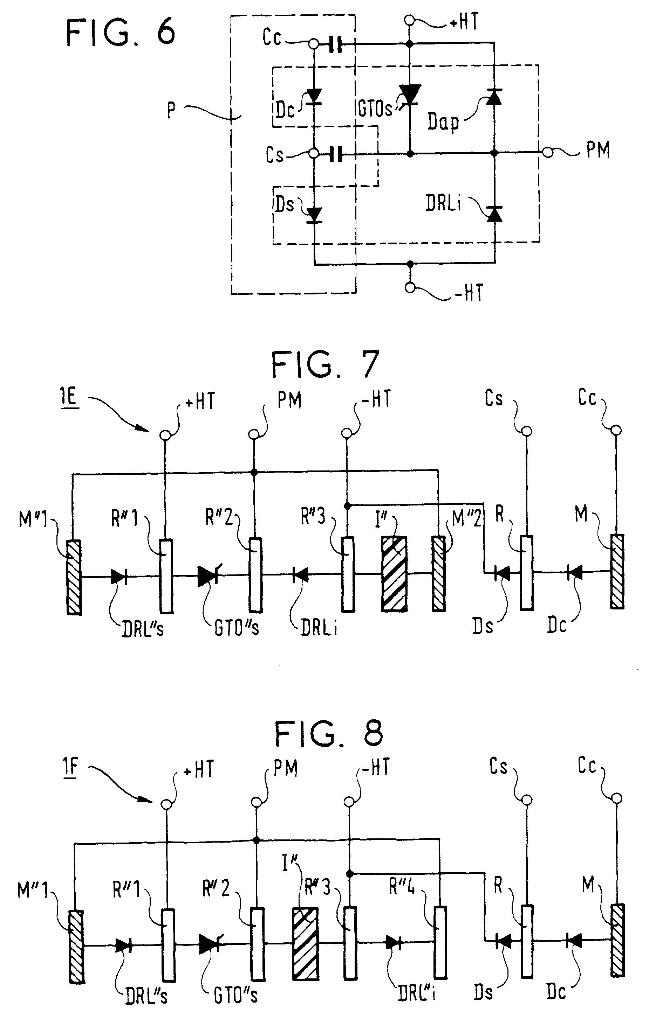

La figure 6 montre le schéma électrique connu d'un bras de convertisseur du type hacheur.

Les figures 7 et 8 montrent une représentation schématique de deux modes de réalisation préférée du dispositif à empilement pour convertisseur et, plus particulièrement, pour hacheur.

Comme représenté à la figure 7, le dispositif à empilement 1E pour hacheur comporte successivement un premier élément conducteur M"1, une première diode de roue libre DRL"s, un premier dispositif de refroidissement R"1, un thyristor GTO"s, un deuxième dispositif de refroidissement R"2, une seconde diode de roue libre DRL"i, un troisième dispositif de refroidissement R"3, un élément isolant I" et un second élément conducteur M"2.

L'anode du thyristor GTO"s est reliée au potentiel +HT.

La cathode du thyristor GTO"s est reliée à la borne PM.

L'anode de la première diode de roue libre DRL"s est reliée à la borne PM.

L'anode de la seconde diode de roue libre DRL"i est reliée au potentiel -HT.

La cathode de la première diode de roue libre DRL"s est reliée au potentiel +HT.

La cathode de la seconde diode de roue libre DRL"i est reliée à la borne PM.

Pour ce faire, la borne de connexion +HT est reliée à la cathode de la première diode de roue libre DRL"s et à l'anode du thyristor GTO"s.

La borne de connexion PM est reliée à la cathode du thyristor GTO"s et à la cathode de la seconde diode de roue libre DRL"i ainsi qu'à l'anode de la première diode de roue libre DRL"s.

La borne de connexion -HT est reliée à l'anode de la seconde diode de roue libre DRL"i.

Comme représenté à la figure 8, le dispositif à empilement 1F pour hacheur comporte successivement un premier élément conducteur M"1, une première diode de roue libre DRL"s, un premier dispositif de refroidissement R"1, un thyristor GTO"s, un deuxième dispositif de refroidissement R"2, un élément isolant I", un troisième dispositif de refroidissement R"3, une seconde diode de roue libre DRL"i et un quatrième dispositif de refroidissement R"4.

Le thyristor GTO"s et l'élément isolant I" sont en série.

L'anode du thyristor GTO"s est reliée au potentiel +HT.

La cathode du thyristor GTO"s est reliée à la borne PM.

L'anode de la première diode de roue libre DRL"s est reliée à la borne PM.

L'anode de la seconde diode de roue libre DRL"i est reliée au potentiel -HT.

La cathode de la première diode de roue libre DRL"s est reliée au potentiel +HT.

La cathode de la seconde diode de roue libre DRL"i est reliée à la borne PM.

Pour ce faire, la borne de connexion +HT est reliée à la cathode de la première diode de roue libre DRL"s et à l'anode du thyristor GTO"s.

La borne de connexion PM est reliée à la cathode du thyristor GTO"s ainsi qu'à l'anode de la première diode de roue libre DRL"s et à la cathode de la seconde diode de roue libre DRL"i.

La borne de connexion -HT est reliée à l'anode de la seconde diode de roue libre DRL"i.

Comme indiqué précédemment, pour constituer une phase complète d'un dispositif à semi-conducteurs, le dispositif à empilement 1A-1F de l'invention est complété successivement par une première diode Ds, un dispositif de refroidissement R, une seconde diode Dc et un élément conducteur M.

La cathode de la première diode Ds est reliée au potentiel -HT.

L'anode de la première diode Ds et la cathode de la seconde diode Dc sont reliée à la borne Cs.

L'anode de la seconde diode Dc est reliée à la borne Cc.

Une capacité Cs du circuit de protection P est disposée entre la borne de connexion électrique de sortie PM et la borne commune Cs des première Ds et seconde diode Dc.

Dans ces deux modes de réalisation préférée du dispositif à empilement de l'invention, les troisièmes dispositifs de refroidissement R"3 (figure 7) et les troisième R"3 ou quatrième R"4 dispositifs de refroidissement (figure 8) peuvent être remplacés par des éléments conducteurs dans le cas d'une puissance thermique à transmettre moindre.

## Revendications

1. Dispositif à empilement de thyristors (GTO) et de diodes de roue libre (DRL) pour dispositif à semi-conducteurs, ledit dispositif à empilement comportant des bornes de connexion électrique d'alimentation (+HT,-HT) et de sortie (PM) dudit dispositif à empilement et des dispositifs de refroidissement, les diodes (DRL) et les thyristors (GTO) étant chacun interposés, dans l'empilement, entre les dispositifs de refroidissement, **caractérisé en ce que** l'agencement géométrique des dispositifs de refroidissement dans l'empilement et du câblage des bornes de connexion électrique est invariable, et l'agencement des diodes de roue libre et des thyristors entre les dispositifs de refroidissement est variable dans l'empilement en fonction du type de dispositif à semi-conducteurs.

2. Dispositif (1A) selon la revendication 1, pour convertisseur, lequel comporte successivement un premier dispositif de refroidissement (R1), un premier thyristor (GTOs), un deuxième dispositif de refroidissement (R2), une première diode de roue libre (DRLs), un troisième dispositif de refroidissement (R3), une seconde diode de roue libre (DRLi), un quatrième dispositif de refroidissement (R4), un second thyristor (GTOi) et un cinquième dispositif de refroidissement (R5), ladite borne de connexion (+HT) étant reliée à l'anode du premier thyristor (GTOs) et à la cathode de la première diode de roue libre (DRLs), ladite borne de connexion (PM) étant reliée à l'anode de ladite première diode de roue libre (DRLs) et à la cathode de la seconde diode de roue libre (DRLi) ainsi qu'à la cathode dudit premier thyristor (GTOs) et à l'anode du second thyristor (GTOi), ladite home de connexion (-HT) étant reliée à l'anode de ladite seconde diode de roue libre (DRLi) et à la cathode dudit second thyristor (GTOi).

3. Dispositif (1A) selon la revendication 2, dans lequel le troisième dispositif de refroidissement R3 est remplacé par un élément conducteur M.

4. Dispositif (1B) selon la revendication 1, pour convertisseur, lequel comporte successivement un premier dispositif de refroidissement R1, une première diode de roue libre DRLs, un deuxième dispositif de refroidissement R2, un premier thyristor GTOs, un troisième dispositif de refroidissement R3, un second thyristor GTOi, un quatrième dispositif de refroidissement R4, une seconde diode de roue libre DRLi et un cinquième dispositif de refroidissement R5, ladite borne de connexion +HT étant reliée à la cathode de la première diode de roue libre DRLs et à l'anode du premier thyristor GTOs, ladite borne de connexion PM étant reliée à la cathode dudit premier thyristor GTOs et à l'anode du second thyristor GTOi ainsi qu'à l'anode de ladite première diode de roue libre DRLs et à la cathode de la seconde diode de roue libre DRLi, ladite borne de connexion -HT étant reliée à la cathode dudit second thyristor GTOi et à l'anode de ladite seconde diode de roue libre DRLi.

5. Dispositif (1B) selon la revendication 4, dans lequel les premier R1 et cinquième R5 dispositifs de refroidissement sont remplacés par des éléments conducteurs M.

6. Dispositif (1C) selon la revendication 1, pour convertisseur, lequel comporte successivement un premier élément conducteur M'1, une première diode de roue libre DRL's, un premier dispositif de refroidissement R'1, un premier thyristor GTO's, un deuxième dispositif de refroidissement R'2, un second thyristor GTO'i, un troisième dispositif de refroidissement R'3, une seconde diode de roue libre DRL'i et un second élément conducteur M'2, ladite borne de connexion +HT étant reliée à la cathode de la première diode de roue libre DRL's et à l'anode du premier thyristor GTO's, ladite borne de connexion PM étant reliée à la cathode dudit premier thyristor GTO's et à l'anode du second thyristor GTO'i ainsi qu'à l'anode de ladite première diode de roue libre DRL's et à la cathode de la seconde diode de roue libre DRL'i, ladite borne de connexion -HT étant reliée à la cathode dudit second thyristor GTO'i et à l'anode de ladite seconde diode de roue libre DRL'i.

7. Dispositif (1D) selon la revendication 1, pour convertisseur, lequel comporte successivement un premier dispositif de refroidissement R'1, un premier thyristor GTO's, un deuxième dispositif de refroidissement R'2, une première diode de roue libre DRL's, un premier élément conducteur M'1, une seconde diode de roue libre DRL'i, un troisième dispositif de refroidissement R'3, un second thyristor GTO'i et un quatrième dispositif de refroidissement R'4, ladite borne de connexion +HT étant reliée à l'anode du premier thyristor GTO's et à la cathode de la première diode de roue libre DRL's, ladite borne de connexion PM étant reliée à l'anode de ladite première diode de roue libre DRL's et à la cathode de la seconde diode de roue libre DRL'i ainsi qu'à la cathode dudit premier thyristor GTO's et à l'anode du second thyristor GTO'i, ladite borne de connexion -HT étant reliée à l'anode de ladite seconde diode de roue libre DRL'i et à la cathode dudit second thyristor GTO'i.

8. Dispositif (1E) selon la revendication 1, pour convertisseur, lequel comporte successivement un premier élément conducteur M"1, une première diode de roue libre DRL"s, un premier dispositif de refroidissement R"1, un thyristor GTO"s, un deuxième dispositif de refroidissement R"2, une seconde diode de roue libre DRL"i, un troisième dispositif de refroidissement R"3, un élément isolant I" et un second élément conducteur M"2, ladite borne de connexion +HT étant reliée à la cathode de la première diode de roue libre DRL"s et à l'anode du thyristor GTO"s, ladite borne de connexion PM étant reliée à la cathode dudit thyristor GTO"s et à la cathode de la seconde diode de roue libre DRL"i ainsi qu'à l'anode de ladite première diode de roue libre DRL"s, ladite borne de connexion -HT étant reliée à l'anode de ladite seconde diode de roue libre DRL"i.

9. Dispositif (1E) selon la revendication 8, dans lequel le troisième dispositif de refroidissement R"3 est remplacé par un élément conducteur.

10. Dispositif (1F) selon la revendication 1, pour convertisseur, lequel comporte successivement un premier élément conducteur M"1, une première diode de roue libre DRL"s, un premier dispositif de refroidissement R"1, un thyristor GTO"s, un deuxième dispositif de refroidissement R"2, un élément isolant I", un troisième dispositif de refroidissement R"3, une seconde diode de roue libre DRL"i et un quatrième dispositif de refroidissement R"4, ladite borne de connexion +HT étant reliée à la cathode de la première diode de roue libre DRL"s et à l'anode du thyristor GTO"s, ladite borne de connexion PM étant reliée à la cathode dudit thyristor GTO"s ainsi qu'à l'anode de ladite première diode de roue libre DRL"s et à la cathode de la seconde diode de roue libre DRL"i, ladite borne de connexion -HT étant reliée à l'anode de ladite seconde diode de roue libre DRL"i.

11. Dispositif (1F) selon la revendication 10, dans lequel le troisième dispositif de refroidissement R"3 ou le quatrième dispositif de refroidissement R"4 est remplacé par un élément conducteur.

12. Dispositif selon l'une quelconque des revendications 1 à 11, lequel est complété successivement par une première diode Ds, un dispositif de refroidissement R, une seconde diode Dc et un élément conducteur M, lesdites première Ds et seconde Dc diodes étant polarisées en inverse sous une tension de potentiels -HT et +HT à travers une capacité Cc d'un circuit de protection P, une capacité Cs dudit circuit de protection P étant disposée entre ladite borne de connexion électrique de sortie PM et la borne commune Cs desdites première Ds et seconde diode Dc.

## Patentansprüche

1. Vorrichtung mit gestapelten Thyristoren (GTO) und Freilaufdioden (DRL) für Halbleitervorrichtungen, wobei die genannte Stapelvorrichtung Stromversorgungsanschlüsse +HT, -HT und einen Ausgangsanschluss PM der genannten Stapelvorrichtung aufweist, sowie Kühlvorrichtungen, wobei die Dioden (DRL) und die Thyristoren (GTO) jeweils im Stapel zwischen den Kühlvorrichtungen eingefügt sind, **dadurch gekennzeichnet, dass** die geometrische Anordnung der Kühlvorrichtungen im Stapel und der Verkabelung der Anschlussklemmen unverändert ist und die Anordnung der Freilaufdioden und der Thyristoren zwischen den Kühlvorrichtungen im Stapel in Abhängigkeit vom Typ der Halbleitervorrichtung veränderlich ist.

2. Vorrichtung (1A) nach Patentanspruch 1 für Wandler, nacheinander eine erste Kühlvorrichtung (R1) aufweisend, einen ersten Thyristor (GTOs), eine zweite Kühlvorrichtung (R2), eine erste Freilaufdiode (DRLs), eine dritte Kühlvorrichtung (R3), eine zweite Freilaufdiode (DRLi), eine vierte Kühlvorrichtung (R4), einen zweiten Thyristor (GTOi) und eine fünfte Kühlvorrichtung (R5), wobei die genannte Anschlussklemme (+HT) mit der Anode des ersten Thyristors (GTOs) und der Kathode der ersten Freilaufdiode (DRLs) verbunden ist, die genannte Anschlussklemme (PM) mit der Anode der genannten ersten Freilaufdiode (DRLs) verbunden ist und mit der Kathode der zweiten Freilaufdiode (DRLi), sowie mit der Kathode des genannten ersten Thyristors (GTOs) und der Anode des zweiten Thyristors (GTOi), wobei die genannte Anschlussklemme (-HT) mit der Anode der genannten zweiten Freilaufdiode (DRLi) und der Kathode des genannten zweiten Thyristors (GTOi) verbunden ist.

3. Vorrichtung (1A) nach Patentanspruch 2, in der die dritte Kühlvorrichtung R3 durch ein Leiterelement M ersetzt ist.

4. Vorrichtung (1B) nach Patentanspruch 1 für Wandler, nacheinander eine erste Kühlvorrichtung R1 aufweisend, eine erste Freilaufdiode DRLs, eine zweite Kühlvorrichtung R2, einen ersten Thyristor GTOs, eine dritte Kühlvorrichtung R3, einen zweiten Thyristor GTOi, eine vierte Kühlvorrichtung R4, eine zweite Freilaufdiode DRLi und eine fünfte Kühlvorrichtung R5, wobei die genannte Anschlussklemme +HT mit der Kathode der ersten Freilaufdiode DRLs und der Anode des ersten Thyristors GTOs verbunden ist, die genannte Anschlussklemme PM mit der Kathode des genannten ersten Thyristors GTOs verbunden ist und mit der Anode des zweiten Thyristors GTOi, sowie mit der Anode der genannten ersten Freilaufdiode DRLs und der Kathode der zweiten Freilaufdiode DRLi, während die genannte Anschlussklemme -HT mit der Kathode des genannten zweiten Thyristors GTOi und der Anode der genannten zweiten Freilaufdiode DRLi verbunden ist.

5. Vorrichtung (1B) nach Patentanspruch 4, in der die erste Kühlvorrichtung R1 und die fünfte R5 durch Leiterelemente M ersetzt sind.

6. Vorrichtung (1C) nach Patentanspruch 1 für Wandler, nacheinander ein erstes Leiterelement M'1 aufweisend, eine erste Freilaufdiode DRL's, eine erste Kühlvorrichtung R'1, einen ersten Thyristor GTO's, eine zweite Kühlvorrichtung R'2, einen zweiten Thyristor GTO'i, eine dritte Kühlvorrichtung R'3, eine zweite Freilaufdiode DRL'i und ein zweites Leiterelement M'2, wobei die genannte Anschlussklemme +HT mit der Kathode der ersten Freilaufdiode DRL's und der Anode des ersten Thyristors GTO's verbunden ist, die genannte Anschlussklemme PM mit der Kathode des genannten ersten Thyristors GTO's verbunden ist und mit der Anode des zweiten Thyristors GTO'i, sowie mit der Anode der genannten ersten Freilaufdiode DRL's und der Kathode der zweiten Freilaufdiode DRL'i, während die genannte Anschlussklemme -HT mit der Kathode des genannten zweiten Thyristors GTO'i und der Anode der genannten zweiten Freilaufdiode DRL'i verbunden ist.

7. Vorrichtung (1D) nach Patentanspruch 1 für Wandler, nacheinander eine erste Kühlvorrichtung R'1 aufweisend, einen ersten Thyristor GTO's, eine zweite Kühlvorrichtung R'2, eine erste Freilaufdiode DRL's, ein erstes Leiterelement M'1, eine zweite Freilaufdiode DRL'i, eine dritte Kühlvorrichtung R'3, einen zweiten Thyristor GTO'i und eine vierte Kühlvorrichtung R'4, wobei die genannte Anschlussklemme +HT mit der Anode des ersten Thyristors GTO's und der Kathode der ersten Freilaufdiode DRL's verbunden ist, die genannte Anschlussklemme PM mit der Anode der genannten ersten Freilaufdiode DRL's verbunden ist und mit der Kathode der zweiten Freilaufdiode DRL'i, sowie mit der Kathode des genannten ersten Thyristors GTO's und der Anode des zweiten Thyristors GTO'i, während die genannte Anschlussklemme -HT mit der Anode der genannten zweiten Freilaufdiode DRL'i und der Kathode des genannten zweiten Thyristors GTO'i verbunden ist.

8. Vorrichtung (1E) nach Patentanspruch 1 für Wandler, nacheinander ein erstes Leiterelement M''1 aufweisend, eine erste Freilaufdiode DRL''s, eine erste Kühlvorrichtung R''1, einen Thyristor GTO''s, eine zweite Kühlvorrichtung R''2, eine zweite Freilaufdiode DRL''i, eine dritte Kühlvorrichtung R''3, ein Isolationselement I'' und ein zweites Leiterelement M''2, wobei die genannte Anschlussklemme +HT mit der Kathode der ersten Freilaufdiode DRL''s und der Anode des Thyristors GTO"s verbunden ist, die genannte Anschlussklemme PM mit der Kathode des genannten ersten Thyristors GTO''s verbunden ist und mit der Kathode der zweiten Freilaufdiode DRL''i, sowie mit der Anode der genannten ersten Freilaufdiode DRL''s, während die genannte Anschlussklemme -HT mit der Anode der genannten zweiten Freilaufdiode DRL''i verbunden ist.

9. Vorrichtung (1E) nach Patentanspruch 8, in der die dritte Kühlvorrichtung R''3 durch ein Leiterelement ersetzt ist.

10. Vorrichtung (1F) nach Patentanspruch 1 für Wandler, nacheinander ein erstes Leiterelement M''1 aufweisend, eine erste Freilaufdiode DRL''s, eine erste Kühlvorrichtung R''1, einen Thyristor GTO''s, eine zweite Kühlvorrichtung R''2, ein Isolationselement I'', eine dritte Kühlvorrichtung R''3, eine zweite Freilaufdiode DRL''i und eine vierte Kühlvorrichtung R''4, wobei die genannte Anschlussklemme +HT mit der Kathode der ersten Freilaufdiode DRL"s und der Anode des Thyristors GTO''s verbunden ist, die genannte Anschlussklemme PM mit der Kathode des genannten Thyristors GTO''s verbunden ist, sowie mit der Anode der genannten ersten Freilaufdiode DRL''s und mit der Kathode der zweiten Freilaufdiode DRL''i, während die genannte Anschlussklemme -HT mit der Anode der genannten zweiten Freilaufdiode DRL''i verbunden ist.

11. Vorrichtung (1F) nach Patentanspruch 10, in der die dritte Kühlvorrichtung R''3 oder die vierte Kühlvorrichtung R''4 durch ein Leiterelement ersetzt ist.

12. Vorrichtung nach irgendeinem der Patentansprüche 1 bis 11, die vervollständigt wird durch nacheinander eine erste Diode Ds, eine Kühlvorrichtung R, eine zweite Diode Dc und ein Leiterelement M, wobei die genannte erste Diode Ds und die zweite Dc durch die Spannung der Potentiale -HT und +HT über einen Kondensator Cc einer Schutzschaltung P invers vorgespannt sind, wobei ein Kondensator Cs der genannten Schutzschaltung P zwischen der genannten Ausgangsklemme PM und der gemeinsamen Klemme Cs der genannten ersten Diode Ds und der zweiten Dc angeordnet ist.

## Claims

1. A stack device comprising a stack of gate turnoff thyristors (GTO) and freewheel diodes (DRL) for a semiconductor circuit, said stack device including electrical power supply connection terminals (+HT and -HT), and an output terminal (PM) of said stack device and of the cooling devices, the diodes (DRL) and the thyristors (GTO) each being interposed, in the stack, between the cooling devices, said stack device being **characterized in that** the geometrical organization of the cooling devices in the stack and of the wiring of the electrical connection terminals is invariable, and the organization of the freewheel diodes and of the thyristors between the cooling devices is variable within the stack as a function of the type of semiconductor device.

2. A device (1A) according to claim 1, for a converter, comprising in succession: a first cooling device (R1), a first gate turnoff thyristor (GTOs), a second cooling device (R2), a first freewheel diode (DRLs), a third cooling device (R3), a second freewheel diode (DRLi), a fourth cooling device (R4), a second gate turnoff thyristor (GTOi), and a fifth cooling device (R5); said connection terminal (+HT) being connected to the anode of the first thyristor (GTOs) and to the cathode of the first freewheel diode (DRLs), said connection terminal (PM) being connected to the anode of said freewheel diode (DRLs) and to the cathode of the second freewheel diode (DRLi), and also to the cathode of said first thyristor (GTOs) and to the anode of the second thyristor (GTOi), and said connection terminal (-HT) being connected to the anode of said second freewheel diode (DRLi) and to the cathode of said second thyristor (GTOi).

3. A device (1A) according to claim 2, in which the third cooling device R3 is replaced by a conductor element M.

4. A device (1B) according to claim 1, for a converter, comprising in succession: a first cooling device R1, a first freewheel diode DRLs, a second cooling device R2, a first gate turnoff thyristor GTOs, a third cooling device R3, a second gate turnoff thyristor GTOi, a fourth cooling device R4, a second freewheel diode DRLi, and a fifth cooling device R5; said connection terminal +HT being connected to the cathode of the first freewheel diode DRLs and to the anode of the first thyristor GTOs, said connection terminal PM being connected to the cathode of said first thyristor GTOs and to the anode of the second thyristor GTOi, and also the anode of said first freewheel diode DRLs and to the cathode of the second freewheel diode DRLi, and said connection terminal -HT being connected to the cathode of said second thyristor GTOi and to the anode of said second freewheel diode DRLi.

5. A device (1B) according to claim 4, in which the first and fifth cooling devices R1 and R5 are replaced by conductor elements M.

6. A device (1C) according to claim 1, for a converter, comprising in succession: a first conductor element M'1, a first freewheel diode DRL's, a first cooling device R'1, a first gate turnoff thyristor GTO's, a second cooling device R'2, a second gate turnoff thyristor GTO'i, a third cooling device R'3, a second freewheel diode DRL'i, and a second conductor element M'2; said connection terminal +HT being connected to the cathode of the first freewheel diode DRL's and to the anode of the first thyristor GTO's, said connection terminal PM being connected to the cathode of said first thyristor GTO's and to the anode of the second thyristor GTO'i, and also to the anode of said first freewheel diode DRL's and to the cathode of the second freewheel diode DRL'i, said connection terminal -HT being connected to the cathode of said thyristor GTO'i and to the anode of said second freewheel diode DRL'i.

7. A device (1D) according to claim 1, for a converter, comprising in succession: a first cooling device R'1, a first gate turnoff thyristor GTO's, a second cooling device R'2, a first freewheel diode DRL's, a first conductor element M'1, a second freewheel diode DRL'i, a third cooling device R'3, a second gate turnoff thyristor GTO'i, and a fourth cooling device R'4; said connection terminal +HT being connected to the anode of the first thyristor GTO's and to the cathode of the first freewheel diode DRL's, said connection terminal PM being connected to the anode of said first freewheel diode DRL's and to the cathode of the second freewheel diodes DRL'i, and also to the cathode of said first thyristor GTO's and to the anode of the second thyristor GTO'i, said connection terminal -HT being connected to the anode of said second freewheel diode DRL'i and to the cathode of said second thyristor GTO'i.

8. A device (1E) according to claim 1, for a converter, comprising in succession: a first conductor element M"1, a first freewheel diode DRL"s, a cooling device R"1, a gate turnoff thyristor GTO"s, a second cooling device R"2, a second freewheel diode DRL"i, a third cooling device R"3, an insulating element I", and a second conductor element M"2; said connection terminal +HT being connected to the cathode of the first freewheel diode DRL"s and to the anode of the thyristor GTO"s, said connection terminal PM being connected to the cathode of said thyristor GTO"s and to the cathode of the said second freewheel diode DRL"i, and also to the anode of said first freewheel diode DRL"s, said connection terminal -HT being connected to the anode of said second freewheel diode DRL"i.

9. A device (1E) according to claim 8, in which the third cooling device R"3 is replaced by a conductor element.

10. A device (1F) according to claim 1, for a converter, comprising in succession: a first conductor element M"1, a first freewheel diode DRL"s, a first cooling device R"1, a gate turnoff thyristor GTO"s, a second cooling device R"2, an insulating element I", a third cooling device R"3, a second freewheel diode DRL"i, and a fourth cooling device R"4; said connection terminal +HT being connected to the cathode of the first freewheel diode DRL"s and to the anode of the thyristor GTO"s, said connection terminal PM being connected to the cathode of said thyristor GTO"s and to the anode of said first freewheel diode DRL"s, and also to the cathode of the second freewheel diode DRL"i, said connection terminal -HT being connected to the anode of said second freewheel diode DRL"i.

11. A device (1F) according to claim 10, in which the third cooling device R"3 or the fourth cooling device R"4 is replaced by a conductor element.

12. A device according to any one of claims 1 to 11, further including in succession: a first diode Ds, a cooling device R, a second diode Dc, and a conductor element M; said first and second diodes Ds and Dc being reversed-biased under a voltage of potentials -HT and +HT via a capacitor Cc of a protection circuit P, a capacitor Cs of said protection circuit P being disposed between said output electrical connection terminal PM and the common terminal Cs common to said first and second diodes Ds and Dc.
